# EUROPÄISCHE PATENTSCHRIFT

(11) **EP 2 168 452 B1**
(45) Veröffentlichungstag und Bekanntmachung des Hinweises auf die Patenterteilung: **28.08.2013**
(21) Anmeldenummer: 09012275.5
(22) Anmeldetag: 28.09.2009
(51) Int. Cl.: A47C 3/26, A47B 9/06, A47B 96/14, A47C 3/28, F16B 7/14

(54) **Vorrichtung zur Höhenverstellung**
Height adjustment device
Dispositif de réglage en hauteur

(30) Priorität: 28.09.2008 CN 200820210684 U
(43) Veröffentlichungstag der Anmeldung: 31.03.2010
(73) Patentinhaber: Westfield Outdoors GmbH, 54516 Wittlich (DE)
(72) Erfinder: Yang, Baoqing, 313200 Wukang (CN)
(74) Vertreter: Sonnenberg, Simon

(56) Entgegenhaltungen:
- DE-U1- 8 804 241
- DE-U1-202006 017 820
- FR-A1- 2 609 776
- GB-A- 2 239 391

## Beschreibung

Die Erfindung betrifft eine Vorrichtung zur Höhenverstellung, insbesondere für Möbel, wie Sitzmöbel und Tische, wobei ein inneres Rohr in einem äußeren Rohr verschiebbar angeordnet und relativ zu diesem festlegbar ist, wobei das innere Rohr in Längsrichtung einen Ausschnitt aufweist, in dem eine Zahnstange angeordnet ist und daß ein mit dem äußeren Rohr verbundenes Eingriffselement vorgesehen ist, das eine Verzahnung aufweist, welche zum lösbaren Eingriff in die Zahnstange des inneren Rohres ausgebildet ist.

Gemäß dem Stand der Technik wird zur Höhenverstellung eines Tischs oder Stuhls ein um ein Innenrohr angeordnetes Außenrohr verwendet, wobei die Tischplatte oder der Sitz des Stuhls bis auf die notwendige Höhe angehoben oder abgesenkt wird und dann das Außenrohr relativ zum Innenrohr festgelegt wird. Diese Vorrichtung hat den Nachteil, daß sie nicht leicht zu benutzen ist und häufig zwei Personen erforderlich sind, die sich gut aufeinander abstimmen müssen.

Um das Problem der Höhenverstellung zu lösen, wird in der CN 2671429 Y eine Vorrichtung zur Höhenregulierung für Beine von Stühlen oder Liegemöbeln beschrieben. Aber diese Vorrichtung hat auch Nachteile: Wegen der glatten Oberfläche der äußeren Hülle wird kein guter Kraftschluß erreicht, weshalb ein sicheres Festlegen in der gewünschten Position nicht möglich ist.

Aus der GB 2 239 391 A ist ein Sitz oder eine Liege mit individuell teleskopierbaren Beinen bekannt, wobei jedes der Beine Rastmittel aufweist, die in Auszugsrichtung eine relativ freie Längenverstellung des Beins ermöglichen, in Einschubrichtung jedoch Widerstand leisten.

Der Erfindung liegt daher die Aufgabe zugrunde, eine derartige Vorrichtung zur Höhenverstellung zu verbessern.

Diese Aufgabe wird erfindungsgemäß dadurch gelöst, daß am Ende des äußeren Rohres Haltemittel für die Eingriffsmittel angeordnet sind, wobei die Haltemittel in den Ausschnitt des inneren Rohres eingreifen.

Durch den Eingriff der Verzahnung des Eingriffselementes in die Zahnstange wird eine formschlüssige Verbindung zwischen dem äußeren und dem inneren Rohr geschaffen, die auch stärkerem Druck, beispielsweise auf eine Tischplatte oder eine Sitzfläche, sicher standhält. Die Haltemittel dienen dazu, ein Verdrehen des inneren Rohres relativ zum äußeren Rohr verhindern, das einem Eingriff des Eingriffselementes in die Zahnstange entgegenstünde.

Bei einer vorteilhaften Ausgestaltung ist vorgesehen, daß an den Haltemitteln ein senkrecht zur Achse der Rohre verschiebbares Eingriffselement mit einer Verzahnung zum Eingriff in die Zahnstange federnd angeordnet ist und daß an den Haltemitteln ein um eine Drehachse schwenkbarer Exzenter angeordnet ist, der zur Druckausübung auf den Rücken des Eingriffselementes ausgebildet ist.

Die Höhenverstellbarkeit, d.h. die Verschiebbarkeit des inneren Rohres relativ zu dem äußeren Rohr im geöffneten Zustand, wobei diese in einem geschlossenen Zustand zueinander festlegbar sind, wird bei dieser Ausgestaltung im wesentlichen durch die folgenden Maßnahmen erreicht: Die Vorrichtung zur Höhenverstellung umfaßt ein äußeres Rohr, in dem ein inneres Rohr verschiebbar angeordnet ist. In der Wandung des inneren Rohres ist in Längsrichtung des inneren Rohres ein schmaler Ausschnitt vorgesehen, in dem eine Zahnstange angeordnet ist. An dem unteren Ende des äußeren Rohres ist ein Eingriffselement angeordnet, das ein Zahnstangenelement zum formschlüssigen Eingriff durch den Ausschnitt in die Zahnstange aufweist. Mit dieser Vorrichtung kann durch Druckausübung auf das Eingriffselement ein Formschluß zwischen diesem und der Zahnstange erreicht werden, wodurch das innere Rohr relativ zu dem äußeren Rohr festgelegt wird. Wird kein Druck auf das Eingriffselement mehr ausgeübt, löst sich das Eingriffselement aufgrund seiner federnden Aufhängung unmittelbar aus dem Eingriff mit der Zahnstange und es ist möglich, das innere Rohr relativ zum äußeren Rohr zu verschieben, um die gewünschte Höhe einzustellen.

Gemäß einer Weiterbildung der Erfindung ist vorgesehen, daß die Drehachse des Exzenters im Bereich der Mittelachse des Eingriffselementes angeordnet ist.

Bei Drehen des Exzenters übt der Exzenter Druck auf das Eingriffselement aus und drückt dieses gegen die Zahnstange. In dieser Stellung ist der Exzenterhebel blockiert und kann nur durch Einwirken einer äußeren Kraft wieder umgelegt werden, um das Eingriffselement von der Zahnstange zu lösen, was die Betriebssicherheit erhöht.

Eine Weiterbildung der Erfindung besteht darin, daß der Exzenter eine Verzahnung aufweist, die zum Eingriff in eine Verzahnung auf dem Rücken des Eingriffselementes ausgebildet ist.

Auf diese Weise wird ein Formschluß auch zwischen dem Exzenter und dem Eingriffselement erreicht.

Es liegt im Rahmen der Erfindung, daß der Exzenter einen Hebel zur Betätigung des Exzenters aufweist.

Es ist zweckmäßig, daß die Zahnstange an beiden Enden Anschläge aufweist.

Die Anschläge beschränken den Lauf des Eingriffselementes und verhindern einen seitlichen Austritt des Eingriffselementes aus dem Bereich der Zahnstange.

Im Rahmen der Erfindung wird eine Vorrichtung zur Höhenverstellung geschaffen, die leicht zu bedienen ist, ein ansprechendes Aussehen aufweist und eine sichere formschlüssige Verbindung zwischen dem äußeren und dem inneren Rohr sicherstellt.

Nachfolgend wird ein Ausführungsbeispiel der Erfindung anhand von Zeichnungen näher beschrieben.

### Es zeigen.

- Fig. 1: die erfindungsgemäße Vorrichtung im geschlossenen Zustand,
- Fig. 2: die erfindungsgemäße Vorrichtung im geöffneten Zustand.

Unter geschlossenem Zustand wird nachfolgend der Zustand verstanden, in dem keine Höhenverstellung möglich ist, während diese im geöffneten Zustand möglich ist.

Die Vorrichtung weist ein äußeres Rohr 1 und ein inneres Rohr 2 auf, wobei das innere Rohr 2 in dem äußeren Rohr 1 verschiebbar angeordnet ist. Das innere Rohr 2 weist in Längsrichtung einen Ausschnitt 3 auf, in dem eine Zahnstange 4 angeordnet ist. Diese Zahnstange 4 weist an beiden Enden Anschläge 5 auf.

An dem unteren freien Ende des äußeren Rohres 1 sind Haltemittel 6 angeordnet, die beidseits in den Ausschnitt des inneren Rohres 2 eingreifen, um ein Verdrehen des inneren Rohres relativ zu dem äußeren Rohr zu verhindern.

In diesen Haltemitteln 6 ist ein Eingriffselement 7 angeordnet, das eine Verzahnung 8 aufweist, die zum Eingriff in die Zahnstange 4 ausgebildet ist. Das Eingriffselement 7 kann senkrecht zur Achse der Rohre 1, 2 durch Druckausübung auf seinen mit einer Einbuchtung 9 versehenen Rücken verschoben werden, um die Verzahnung 8 in Eingriff mit der Zahnstange 4 zu bringen. Das Eingriffselement 7 weist weiterhin beidseits Füße 10 auf, die gegen die Haltemittel 6 drücken und die so ausgebildet sind, daß das Eingriffselement 7 federnd der Druckausübung entgegenwirkt. Auf diese Weise wird erreicht, daß die Verzahnung des Eingriffselementes 7 ohne Druckausübung nicht im Eingriff mit der Zahnstange 4 ist.

Weiterhin ist in den Haltemitteln 6 ein Exzenter 11 vorgesehen, dessen Drehachse 12 im Bereich der Mittelachse des Eingriffselementes 7 angeordnet ist, und der. zum Ausüben von Druck auf das Eingriffselement 7 dient. Der Exzenter 11 weist einen Hebel 13 auf, über den der Exzenter 11 verschwenkt wird.

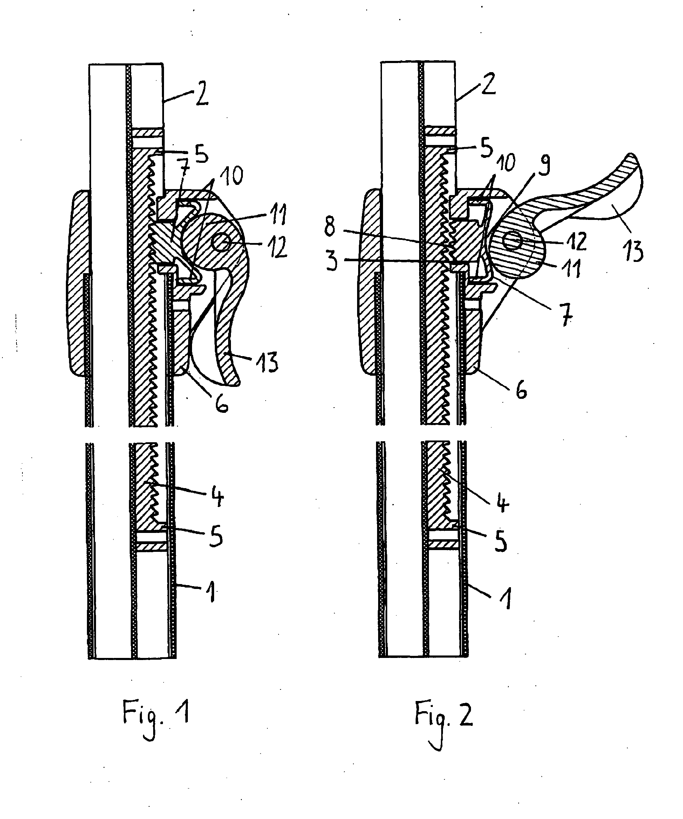

Der Exzenter 11 rollt auf der Einbuchtung 9 auf dem Rücken des Eingriffselementes 7 ab und übt im geschlossenen Zustand (Fig. 1) Druck auf das Eingriffselement 7 aus, wodurch sich das federnd aufgehängte Eingriffselement 7 vertikal zur Längsachse der Rohre 1, 2 zur Zahnstange 4 hin bewegt, bis es zum Eingriff der Verzahnung 8 des Eingriffselementes 7 in die Zahnstange 4 und somit zur Festlegung des inneren Rohrs 2 relativ zum äußeren Rohr 1 kommt. In diesem Zustand ist der Exzenter 11 nur durch Aufbringen einer äußeren Kraft zu lösen.

Im geöffneten Zustand (Fig. 2) übt der Exzenter 11 keinen oder einen nur sehr geringen Druck auf das Eingriffselement 7 aus, so daß die Verzahnung 8 des Eingriffselementes 7 aufgrund dessen federnder Aufhängung in den Haltemitteln 6 sich selbsttätig aus dem Eingriff mit der Zahnstange 4 löst, so daß das innere Rohr 2 relativ zu dem äußeren Rohr 1 längenveränderbar ist.

## Patentansprüche

1. Vorrichtung zur Höhenverstellung, insbesondere für Möbel, wie Sitzmöbel und Tische, wobei ein inneres Rohr (2) in einem äußeren Rohr (1) verschiebbar angeordnet und relativ zu diesem festlegbar ist, wobei das innere Rohr (2) in Längsrichtung einen Ausschnitt (3) aufweist, in dem eine Zahnstange (4) angeordnet ist und daß ein mit dem äußeren Rohr (1) verbundenes Eingriffselement (7) vorgesehen ist, das eine Verzahnung (8) aufweist, welche zum lösbaren Eingriff in die Zahnstange (4) des inneren Rohres (2) ausgebildet ist, **dadurch gekennzeichnet, daß** am Ende des äußeren Rohres (1) Haltemittel (6) für das Eingriffselement (7) angeordnet sind, wobei die Haltemittel (6) in den Ausschnitt (3) des inneren Rohres (2) eingreifen.

2. Vorrichtung gemäß Anspruch 1, **dadurch gekennzeichnet, daß** an den Haltemitteln (6) federnd ein senkrecht zur Achse der Rohre (1, 2) verschiebbares Eingriffselement (7) mit einer Verzahnung (8) zum Eingriff in die Zahnstange (4) angeordnet ist und daß an den Haltemitteln (6) ein um eine Drehachse schwenkbarer Exzenter (11) angeordnet ist, der zur Druckausübung auf den Rücken des Eingriffselementes (7) ausgebildet ist.

3. Vorrichtung gemäß Anspruch 2, **dadurch gekennzeichnet, daß** die Drehachse (12) des Exzenters (11) im Bereich der Mittelachse des Eingriffselementes (7) angeordnet ist.

4. Vorrichtung gemäß Anspruch 2, **dadurch gekennzeichnet, daß** der Exzenter (11) eine Verzahnung aufweist, die zum Eingriff in eine Verzahnung auf dem Rücken des Eingriffselementes (7) ausgebildet ist.

5. Vorrichtung gemäß Anspruch 2, **dadurch gekennzeichnet, daß** der Exzenter (11) einen Hebel (13) zur Betätigung des Exzenters (11) aufweist.

6. Vorrichtung gemäß Anspruch 1, **dadurch gekennzeichnet, daß** die Zahnstange (4) an beiden Enden Anschläge (3) aufweist.

## Claims

1. Device for height adjustment, particularly for furniture such as seating and tables, where an inner tube (2) is arranged to slide inside an outer tube (1) and can be fixed in relation to the same, with the inner tube (2) exhibiting a cut-out (3) in the longitudinal direction inside which a toothed rod (4) is arranged and that an engaging element (7) connected to the outer tube (1) is provided which has toothed gearing (8) designed to detachably engage with the toothed rod (4) of the inner tube (2), **characterised by** the fact that at the end of the outer tube (1) retaining elements (6) are arranged for the engaging element (7), with the retaining elements (6) engaging with the cut-out (3) of the inner tube (2).

2. Device according to Claim 1. **characterised by** the fact that a spring-type engaging element (7) is arranged on the retaining elements (6) and is able to slide perpendicularly to the axis of the tubes (1, 2) with toothed gearing (8) for engaging with the toothed rod (4) and that an eccentric element (11) pivotable around a turning axis is arranged which is designed to apply pressure to the rear side of the engaging element (7).

3. Device according to Claim 2, **characterised by** the fact that the turning axis (12) of the eccentric element (11) is arranged in the area of the central axis of the engaging element (7).

4. Device according to Claim 2, **characterised by** the fact that the eccentric element (11) exhibits toothed gearing which is designed to engage with toothed gearing on the rear side of the engaging element (7).

5. Device according to Claim 2. **characterised by** the fact that the eccentric element (11) exhibits a lever (13) for operation of the eccentric element (11).

6. Device according to Claim 1, **characterised by** the fact that the toothed rod (4) exhibits end stops (3) at both ends.

## Revendications

1. Dispositif pour le réglage en hauteur, en particulier pour des meubles, comme des sieges et des tables, où un tube intérieur (2) est disposé de manière coulissante dans un tube extérieur (1) et peut être fixé relativement à celui-ci, le tube intérieur (2) présentant dans le sens de la longueur une encoche (3) dans laquelle est disposée une crémaillère (4) et qu'est prévu un élément d'engrénement (7) relié au tube extérieur (1) qui présente une denture (8) laquelle est formée pour un engrènement amovible dans la crémaillère (4) du tube intérieur (2), **caractérisé en ce que** des moyens de maintien (6) pour l'élément d'engrènement (7) sont disposés à l'extrémité du tube extérieur (1), ces moyens de maintien (6) s'engrenant dans l'encoche (3) du tube intérieur (2)

2. Dispositif selon la revendication 1, **caractérisé en ce qu'**est disposé au niveau des moyens de maintien (6) un élément d'engrènement à ressort (7) coulissant perpendiculairement à l'axe des tubes (1, 2) avec une denture (8) pour l'engrènement dans la crémaillère (4) et qu'est disposé au niveau des moyens de maintien (6) un excentrique pivotant sur un axe de rotation (11) forme pour exercer une pression sur le dos de l'élément d'engrénement (7)

3. Dispositif selon la revendication 2, **caractérisé en ce que** l'axe de rotation (12) de l'excentrique (11) est disposé au niveau de l'axe central de l'élément d'engrènement (7)

4. Dispositif selon la revendication 2, **caractérisé en ce que** l'excentrique (11) présente une denture qui est formée pour l'engrènement dans la denture sur le dos de l'élément d'engrènement (7)

5. Dispositif selon la revendication 2, **caractérisé en ce que** l'excentrique (11) presente un levier (13) pour actionner l'excentrique (11).

6. Dispositif selon la revendication 1, **caractérisé en ce que** la crémaillère (4) présente des butées (3) aux deux extrémités
